# EUROPÄISCHE PATENTSCHRIFT

(11) **EP 1 386 819 B1**
(45) Veröffentlichungstag und Bekanntmachung des Hinweises auf die Patenterteilung: **24.05.2006**
(21) Anmeldenummer: 03014343.2
(22) Anmeldetag: 26.06.2003
(51) Int. Cl.: B62D 1/16, B62D 5/04

(54) **Lenksystem für ein Fahrzeug**
Steering system for a vehicle
Système de direction pour un véhicule

(30) Priorität: 02.08.2002 DE 10235396
(43) Veröffentlichungstag der Anmeldung: 04.02.2004
(73) Patentinhaber: ZF Lenksysteme GmbH, 73527 Schwäbisch Gmünd (DE)
(72) Erfinder: Leutner, Wilfried, 73527 Schwäbisch Gmünd (DE)

(56) Entgegenhaltungen:
- DE-A- 3 544 350
- DE-A- 10 051 187
- DE-A- 19 528 457
- DE-C- 19 539 101
- DE-C- 19 625 503

## Beschreibung

Die Erfindung bezieht sich auf ein Lenksystem für ein Fahrzeug nach dem Oberbegriff des Anspruches 1.

Aus der Druckschrift DE 195 39 101 C1 ist ein sogenanntes Steer-by-Wire-Lenksystem bekannt, bei dem eine vom Fahrer erzeugte Lenkbewegung mit Hilfe einer Sensorik gemessen wird, wobei die Lenkbewegung als Eingangssignal einer Regel- und Steuereinheit zugeführt wird, in der in Abhängigkeit von Fahrzeugzustands- und Betriebsgrößen Stellsignale für ein Stellelement erzeugt werden, über das die lenkbaren Fahrzeugräder einzustellen sind. Bei derartigen Systemen ist der sonst übliche starre, kinematische Durchgriff zwischen Lenkrad und Fahrzeugrädern aufgehoben, wodurch zusätzliche Einstellmöglichkeiten gegeben sind. Es kann insbesondere der aktuelle Fahrzustand bei der Umsetzung der Lenkbewegung berücksichtigt werden.

Um dem Fahrer ein Lenkgefühl wie bei herkömmlichen Lenkungen zu vermitteln, ist das Lenkrad mit einer Rückstellfederanordnung gekoppelt, welche einer Auslenkung des Lenkrades aus einer Mittellage entgegenwirkt. Die Rückstellfederanordnung umfasst zwei Schraubendruckfedern, welche auf einen gemeinsamen, vom Lenkrad zu verstellenden Mitnehmer wirken und diesen bei einer Verdrehung des Lenkrades in seine Ausgangsposition zurückzustellen versuchen. Eine zusätzliche Einstellmöglichkeit ist durch die Verstellung der Fußpunkte jeder Schraubendruckfeder mit Hilfe hydraulisch verstellbarer Widerlager gegeben, wodurch ein Hystereseverhalten des auf das Lenkrad rückwirkenden Gegenmomentes bei einem Hin- und Herdrehen des Lenkrades realisierbar ist.

Ein ähnliches Lenksystem ist aus der DE 196 25 503 C1 bekannt, wobei jedoch in diesem Fall die Schraubendruckfedern über eine als Ritzel gestaltete Lenkwelle gespannt werden, so dass mit zunehmender Auslenkung des Lenkrades auch ein zunehmendes Rückstellmoment erzeugt wird. Diese Ausführung ist jedoch nicht frei parametrisierbar.

Ein Lenksystem mit einem mechanischen Durchgriff zwischen Lenkrad und gelenkten Fahrzeugrädern wird in der Druckschrift DE-PS 35 44 350 beschrieben, bei der zur Unterstützung der Lenkbewegung ein Antriebsmotor vorgesehen ist, wobei zwischen dem Antriebsmotor und der Lenkspindel eine Flüssigkeitsreibungskupplung zwischengeschaltet ist, die dämpfend auf Kräfte wirkt, die über die Lenkung als Stöße oder Drehschwingungen ins Lenkrad übertragen werden könnten. Die Lenkkraftunterstützung kann über die Drehzahl des Antriebsmotors gesteuert werden, indem mit zunehmender Drehzahl ein höheres Drehmoment übertragen wird.

Bei einem Ausfall des Antriebsmotors ist über die Flüssigkeitsreibungskupplung zwar ein Drehmoment auf die Fahrzeugräder übertragbar, das jedoch auf einem deutlichen geringeren Niveau liegt als bei laufendem Antriebsmotor

Schließlich ist die DE 100 51 187 A1 bekannt. Sie betrifft ein Lenkmodul einer Steer-by-Wire-Lenkanlage. Diese Anlage weist einen Feedback-Aktuator auf. Rückwirkungen der Fahrbahn auf die gelenkten Fahrzeugräder werden von diesem Feedback-Aktuator auf ein Lenkrad übertragen. Zu diesem Zweck weist der Feedback-Aktuator einen Elektromotor auf. Ferner ist ein Federelement vorgesehen. Dieses leistet Widerstand gegen Lenkrad-Drehbewegungen, welche den aktuellen Lenkradwinkel vergrößern. Zusätzlich ist ein Dämpfungselement vorgesehen. Dieses wirkt über eine Lenksäule auf das Lenkrad. Das Dämpfungselement kann ein Flügelrad in einem Dämpfungsmedium oder eine Drossel in einem Strom eines Dämpungsmediums sein. Das Drehmoment des Elektromotors wirkt unmittelbar auf die Lenksäule. Die Federkraft des Federelements wirkt zwischen der Lenksäule und dem Chassis des Fahrzeugs. Als Federelement kann auch ein Torsionsstab dienen.

Der Erfindung liegt das Problem zugrunde, ein konstruktiv einfach zu realisierendes Lenksystem für ein Fahrzeug anzugeben, bei dem auch bei einem Ausfall des aktiven Stellelementes, über das ein auf das Lenkrad wirkendes Rückstellmoment erzeugbar ist, Momentensprünge vermieden werden, die im Lenkrad spürbar sind, und zu gefährlichen, ungewollten Lenkbewegungen führen können.

Dieses Problem wird erfindungsgemäß mit den Merkmalen des Anspruches 1 gelöst. Die Unteransprüche geben zweckmäßige Weiterbildungen an.

Bei dem erfindungsgemäßen Lenksystem handelt es sich um ein Steer-by-Wire-Lenksystem, bei dem im Gegensatz zu herkömmlichen Lenksystemen keine starre Verbindung zwischen Lenkrad und gelenkten Fahrzeugrädern gegeben ist, sondern die vorgegebene Lenkbewegung gemessen bzw. ermittelt und als Sollgröße auf einen Lenkwinkel-Stellmotor übertragen wird, welcher das bzw. die Fahrzeugräder in der gewünschten Weise auslenkt. Um dem Fahrer den gewohnten Widerstand bei der Betätigung des Lenkrades zu vermitteln, ist eine Lenkmoment-Simulationseinrichtung vorgesehen, über die ein auf das Lenkrad wirkendes Rückstellmoment erzeugt werden kann. Diese Lenkmoment-Simulationseinrichtung umfasst eine elektrisch betätigbare Stelleinheit, die in Abhängigkeit von Fahrzeugzustands- und Betriebsgrößen - beispielsweise die Fahrzeuggeschwindigkeit - ein in der Höhe veränderliches Rückstellmoment generiert.

Um zu vermeiden, dass bei einem Ausfall der elektrisch betätigbaren Stelleinheit ein Momentensprung im Rückstellmoment auftritt, welcher zu ungewollten Lenkbewegungen des Fahrers führen könnte, ist erfindungsgemäß der Lenkmoment-Simulationseinrichtung ein passives Kraftelement zugeordnet, das bei einem Ausfall der Stelleinheit ein Mindestmoment erzeugt. Auf diese Weise ist sichergestellt, dass unter allen Betriebsumständen der Fahrer ein Mindestmoment bei einer Betätigung des Lenkrades verspürt. Momentensprünge, hervorgerufen durch einen eventuellen Ausfall der Stelleinheit in der Lenkmoment-Simulationseinrichtung, werden hierdurch vermindert oder verhindert.

Als passives Kraftelement, welches zur Sicherstellung eines Mindestmomentes eingesetzt wird, wird in einer ersten bevorzugten Ausführung ein Reibelement eingesetzt, das in der Lage ist, ein konstantes, der Lenkbewegung des Lenkrades entgegengesetztes Reibmoment zu erzeugen.

Diese Ausführung lässt sich in einer besonders vorteilhaften Weise mit einer Torsionsfeder kombinieren, die ebenfalls Bestandteil der Lenkmoment-Simulationseinrichtung ist und von der elektrisch betätigbaren Stelleinheit beaufschlagt werden kann. Über die Torsionsfeder bzw. die Betätigung der Torsionsfeder mit Hilfe der Stelleinheit kann ein gewünschtes Soll-Drehmoment eingestellt werden, auch für den Fall, dass der Wert der konstanten Reibung in dem Reibelement nicht mit hinreichender Genauigkeit feststeht. In diesem Fall kann über eine Sensorik das aktuell wirkende Drehmoment gemessen und dem aktuellen Fahrzustand des Fahrzeugs entsprechend ein Sollmoment ermittelt werden, welches über die Beaufschlagung der Torsionsfeder durch die Stelleinheit in exakter Weise eingestellt werden kann. Die Stelleinheit muss hierbei aufgrund der richtungsunabhängigen Wirkung der Reibung in jedem Fall ein Reibmoment des Reibelementes überwinden. Ein Vorteil dieser Ausführung liegt darin, dass bei einem Ausfall der Stelleinheit das wirksame Drehmoment konstant bleibt, da die Torsionsfeder unabhängig vom Zustand der Stelleinheit weiterhin wirksam bleibt, so dass keine Momentensprünge erfolgen. Ein weiterer Vorteil ist darin zu sehen, dass die Stelleinheit im Falle eines gleich bleibenden Lenkwinkels und Lenkmoments stromlos geschaltet werden kann, wodurch ein Energiespareffekt zu erzielen ist. Sofern sich die Vorgaben durch den Fahrer bzw. die Fahrzeugzustandsbedingungen nicht ändern, ist eine aktive Betätigung der Stelleinheit nicht zwingend erforderlich.

Alternativ zum Reibelement, gegebenenfalls auch zusätzlich zu diesem, kann als passives Kraftelement auch ein Dämpfungselement eingesetzt werden, über das ein geschwindigkeitsabhängiges, der Lenkradbewegung entgegengerichtetes Dämpfungsmoment zu erzeugen ist. Diese Ausführung hat den Vorteil, dass der Einfluss des Dämpfungselementes unter Normalbedingungen gering ist, so dass ein Momentensensor bzw. eine Sensorik zur Ermittlung des Drehmomentes nicht zwingend benötigt wird. Die bei höheren Lenkgeschwindigkeiten signifikant werdende Dämpfung kann durch die Stelleinheit entsprechend dem einzustellenden Sollmoment teilweise oder vollständig kompensiert werden.

Das passive Kraftelement kann entweder permanent zugeschaltet sein, oder aber, gemäß einer weiteren Ausführung, zu- und abschaltbar ausgebildet sein, wobei im Falle voller Funktionstüchtigkeit der elektrischen Stelleinheit das betreffende Kraftelement abgeschaltet ist und die Zuschaltung nur bei einem Ausfall der Stelleinheit erfolgt. Da unter Normalbedingungen das Kraftelement nicht wirksam ist, kann bei einer Verwendung eines Reibelementes als Kraftelement auch auf die Torsionsfeder sowie gegebenenfalls die Sensorik zur Drehmomentmessung verzichtet werden.

In den Figuren sind in schematischer Weise Ausführungsbeispiele der Erfindung dargestellt.

Es zeigen:
- Fig. 1: ein Lenksystem für ein Fahrzeug mit einer Lenkmoment-Simulationseinrichtung, die ein Reibelement, eine elektrisch betätigbare Stelleinheit sowie eine Torsionsfeder umfasst, wobei zusätzlich der Drehmomentverlauf, der in der Simulationseinrichtung erzeugbar ist, in Abhängigkeit des Lenkwinkels dargestellt ist,
- Fig. 2: eine Ausführung mit einem zu- und abschaltbaren Reibelement, ohne Torsionsfeder,
- Fig. 3: eine Ausführung mit einem Dämpfungselement,
- Fig. 4: eine Fig. 3 entsprechende Ausführung, jedoch mit zu- und abschaltbarem Dämpfungselement.

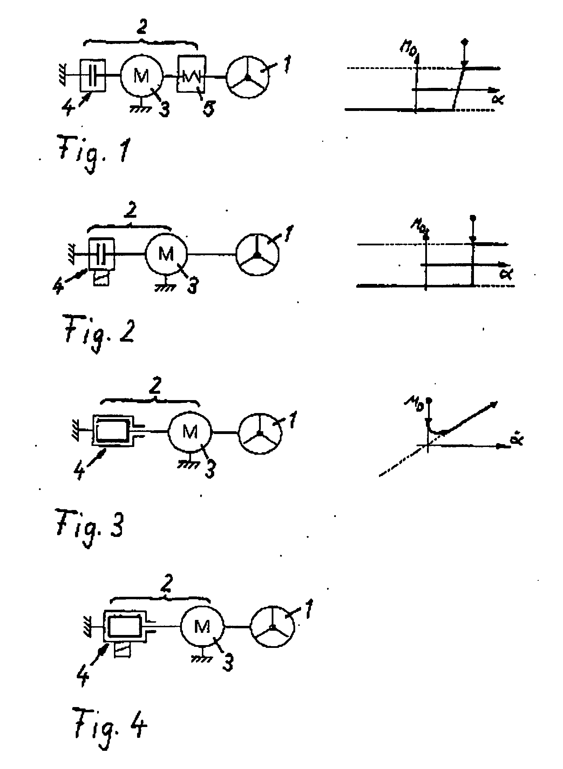

Das in Fig. 1 dargestellte Lenksystem für ein Fahrzeug ist als Steer-by-Wire-Lenksystem ausgeführt, bei dem über ein Lenkrad 1 vom Fahrer eine Lenkbewegung vorgegeben wird, die über eine geeignete Sensorik erfasst wird, wobei die Lenkbewegung als Eingangssignal einer Regel- und Steuereinheit zugeführt wird, in welcher in Abhängigkeit weiterer Fahrzeugzustands- und Betriebsgrößen - insbesondere der Fahrzeuggeschwindigkeit - Stellsignale zur Beaufschlagung eines Lenkwinkel-Stellmotors erzeugt werden, der auf die lenkbaren Fahrzeugräder wirkt und die gewünschte Lenkposition einstellt. Ein unmittelbarer, mechanischer Durchgriff zwischen dem Lenkrad und den lenkbaren Fahrzeugrädern ist bei derartigen Steer-by-Wire-Systemen aufgehoben.

Zur Erzeugung eines realitätsnahen Lenkgefühls im Lenkrad 1 ist dieses mit einer Lenkmoment-Simulationseinrichtung 2 gekoppelt, in welcher situationsabhängig ein Drehmoment erzeugbar ist, so dass beispielsweise bei Kurvenfahrt ein der Auslenkung des Lenkrades entgegengesetztes Rückstellmoment erzeugt werden kann. Die Lenkmoment-Simulationseinrichtung 2 umfasst im Ausführungsbeispiel nach Fig. 1 eine elektrisch betätigbare Stelleinheit 3, welche insbesondere als Stellmotor M ausgeführt ist, sowie ein passives Kraftelement 4 und als weiteres passives Element eine Torsionsfeder 5. Das Kraftelement 4 ist im Ausführungsbeispiel nach Fig. 1 als Reibelement ausgebildet, in welchem ein konstantes, jeder Lenkbewegung entgegengerichtetes Reibmoment erzeugt wird.

Im Normalbetrieb - bei voll funktionsfähiger Stelleinheit 3 - wird das aktuell auf das Lenkrad 1 wirkende Drehmoment über eine geeignete Sensorik gemessen und in Abhängigkeit des Messwertes sowie der Fahrzeugzustands- und Betriebsgrößen ein Sollwert für das Drehmoment vorgegeben, das durch eine entsprechende Betätigung der Stelleinheit 3 über die Torsionsfeder 5 eingestellt wird, wobei bei jeder Betätigung der Stelleinheit 3 das Reibmoment des Reibelementes 4 überwunden werden muss. Ein beispielhafter Verlauf für das nach einem Ausfall der Stelleinheit 3 wirksame Drehmoment ist in dem Drehmoment(M_{D})-Drehwinkel(α)―Diagramm der Fig. 1 dargestellt. Bei einem aktuell eingestellten Lenkmoment M_{D,aktuell} soll in dem gezeigten Ausführungsbeispiel die elektrisch betätigbare Stelleinheit 3 ausfallen; dieser Zeitpunkt ist in dem Diagramm mit dem eingetragenen Pfeil gekennzeichnet. Bei gleich bleibendem Lenkwinkel α ändert sich trotz des Ausfalles der Stelleinheit 3 das Drehmoment M_{D} nicht, sondern verbleibt auf dem erreichten Niveau. Bei einem Ausfall der Stelleinheit ist somit kein Momentensprung zu erwarten, der den Fahrer irritieren könnte. Wird das Lenkrad bewegt, so ändert sich das Lenkmoment zunächst entsprechend der Torsion der Torsionsfeder 5. Erreicht das Lenkmoment den Wert des Reibmoments des Reibelements 4, so steigt es nicht weiter, sondern bleibt für die weitere Lenkbewegung konstant. Sofern das Lenkmoment aktuell größer ist als der Wert des Reibmoments, fällt das Lenkmoment schlagartig auf den Wert des Reibmomentes ab; in diesem Fall muss der Motor im Normalbetrieb weniger Reibung überwinden, wodurch Energie eingespart werden kann. Sofern andererseits das Lenkmoment kleiner ist als der Wert des Reibmoments, kann ein Momentensprung vermieden werden.

Gegebenenfalls kann bei gleich bleibenden äußeren Bedingungen, insbesondere bei gleich bleibendem Lenkwinkel und gleich bleibender Fahrzeuggeschwindigkeit, das Stellelement 3 abgeschaltet werden, da auch in diesem Fall das auf das Lenkrad 3 wirkende Drehmoment konstant bleibt; auf diese Weise kann Energie eingespart werden.

In Fig. 2 ist eine alternative Ausführung mit einem als Reibelement ausgebildeten Kraftelement 4 dargestellt. Im Unterschied zu dem Ausführungsbeispiel nach Fig. 1 ist keine Torsionsfeder vorgesehen, dafür ist das Reibelement 4 zu- und abschaltbar ausgebildet und kann in vorgegebenen Betriebszuständen zugeschaltet oder abgeschaltet werden. Es ist vorgesehen, dass das Reibelement 4 bei voller Funktionsfähigkeit der Stelleinheit 3 abgeschaltet bleibt und das auf das Lenkrad 1 wirkende Drehmoment ausschließlich über eine Betätigung der Stelleinheit 3 erzeugt wird. Das Reibelement hat in dieser Ausführung keinen Einfluss auf die Normalfunktion der Lenkmoment-Simulationseinrichtung 2. Bei einem Ausfall der Stelleinheit 3 wird dagegen das Reibelement 4 zugeschaltet und es wird ein konstantes Reibmoment erzeugt.

Die Betriebsweise ist in dem in Fig. 2 gezeigten Diagramm dargestellt. Bei dem mit dem eingetragenen Pfeil gekennzeichneten Lenkwinkel soll die Stelleinheit 3 ausfallen, gleichzeitig wird das Reibelement 4 zugeschaltet, dessen Reibmoment für den weiteren zeitlichen Verlauf aufrechterhalten bleibt. Im Unterschied zum vorhergehenden Ausführungsbeispiel ändert sich das Drehmoment M_{D} ausgehend vom aktuellen Lenkmoment auf das Niveau des Reibmoments, wobei der Übergang schlagartig erfolgt.

Bei einer irrtümlichen Zuschaltung des Kraftelementes in Betriebsphasen mit voller Funktionsfähigkeit des Stellelementes sind Gefährdungen praktisch ausgeschlossen, da das Drehmomentniveau des Kraftelementes verhältnismäßig gering ist, so dass das zusätzlich wirkende Drehmoment des Kraftelementes zwar das Niveau des Rückstellmomentes verändert, nicht jedoch zu einem unzulässig hohen Momentensprung führt.

Im Ausführungsbeispiel nach Fig. 3 umfasst die Lenkmoment-Simulationseinrichtung 2 neben dem Stellelement 3 ein ständig mitlaufendes Kraftelement 4, welches als Dämpfungselement ausgeführt ist. Das Dämpfungselement wirkt jeder Lenkwinkelbewegung entgegen, wobei, wie dem Drehmornent(M_{D})-Lenkwinkelgeschwindigkeits(da/dt)-Verlauf zu entnehmen, mit zunehmender Lenkwinkelgeschwindigkeit auch das vom Dämpfungselement erzeugte Drehmoment ansteigt. Bei Ausfall der Stelleinheit 3 wird die ungewollte Lenkbewegung abgemildert, weil hohe Lenkgeschwindigkeiten durch die Dämpfung verhindert werden. Da der Fahrer nach kurzer Zeit (Reaktionszeit) aufhört zu lenken, ist der Lenkwinkel deutlich kleiner als ohne die Einrichtung. Der Kurvenverlauf zeigt ein mögliches Beispiel des Momentenverlaufes nach einem Ausfall. Das Lenkmoment fällt zunächst ab, während die Lenkgeschwindigkeit steigt. Durch die Trägheit des Lenkrades fällt das Lenkmoment jedoch nicht auf Null ab. Mit zunehmender Lenkgeschwindigkeit wirkt die Dämpfung des Reibungselements immer stärker.

Fig. 4 entspricht der Ausführung nach Fig. 3, jedoch mit der Modifikation, dass das als Dämpfungselement ausgeführte Kraftelement 4 zuschaltbar und abschaltbar ausgebildet ist. Das Dämpfungselement 4 bleibt bei normaler Betriebsweise abgeschaltet und wird nur im Fehlerfall bei einem Ausfall des Stellelementes zugeschaltet. Die Drehmoment-Winkelgeschwindigkeits-Kurve entspricht derjenigen aus Fig. 3.

Die zu- und abschaltbaren Kraftelemente können gegebenenfalls auch bei voller Funktionsfähigkeit des Stellelementes aktiviert werden, um die Drehmoment-Drehwinkel-Kurve bzw. Drehmoment-Drehwinkelgeschwindigkeits-Kurve zu beeinflussen. Hierdurch kann beispielsweise bei Verwendung eines zuschaltbaren Reibelementes erreicht werden, dass die Reibung beim Lenken nach außen - in Richtung einer End-Anschlagsstellung - höher ist als beim Lenken nach innen. Durch ein Zu- bzw. Abschalten kann bei der Bewegung nach innen die Reibung bis auf Null reduziert werden.

## Patentansprüche

1. Lenksystem
- für ein Fahrzeug, bei dem eine über ein Lenkrad (1) vorgegebene Lenkbewegung über einen Lenkwinkel-Stellmotor auf ein lenkbares Fahrzeugrad übertragbar ist,
- mit einer Lenkmoment-Simulationseinrichtung (2), über die ein auf das Lenkrad (1) wirkendes Drehmoment (M_{D}) vorgebbar ist, wobei die Lenkmoment-Simulationseinrichtung eine elektrisch betätigbare Stelleinheit (3) umfasst,
- bei dem die Lenkmoment-Simulationseinrichtung ein passives Kraftelement (4) umfasst, das bei einem Ausfall der elektrisch betätigbaren Stelleinheit (3) ein der Lenkbewegung entgegengesetztes Drehmoment (M_{D}) erzeugt,
**dadurch gekennzeichnet, dass**
das vorgegebene Drehmoment (M_{D}) durch eine entsprechende Betätigung der Stelleinheit (3) über eine Torsionsfeder (5) einstellbar ist.

2. Lenksystem nach Anspruch 1,
**dadurch gekennzeichnet,**
**dass** das passive Kraftelement (4) ein Reibelement zur Erzeugung eines konstanten Reibmoments ist.

3. Lenksystem nach Anspruch 1,
**dadurch gekennzeichnet,**
**dass** das passive Kraftelement (4) ein Dämpfungselement zur Erzeugung eines geschwindigkeitsabhängigen Dämpfungsmomentes ist.

4. Lenksystem nach Anspruch 3,
**dadurch gekennzeichnet,**
**dass** das Dämpfungsmoment über die Stelleinheit (3) kompensiert wird.

5. Lenksystem nach einem der Ansprüche 1 bis 4,
**dadurch gekennzeichnet,**
**dass** das Kraftelement (4) zu- und abschaltbar ausgeführt ist, wobei bei funktionstüchtiger, elektrisch betätigbarer
Stelleinheit (3) das Kraftelement (4) abgeschaltet ist und die Zuschaltung bei einem Ausfall der Stelleinheit (3) erfolgt.

6. Lenksystem nach Anspruch 1,
**dadurch gekennzeichnet,**
**dass** zusätzlich zu einem passiven Kraftelement (4), das als Reibelement zur Erzeugung eines konstanten Reibmomentes
ausgebildet ist, ein Dämpfungselement eingesetzt ist, über das ein geschwindigkeitsabhängiges, der Lenkradbewegung
entgegengesetztes Dämpfungsmoment erzeugbar ist.

## Claims

1. Steering system
- for a vehicle, in which a steering movement which is defined via a steering wheel (1) can be transmitted to a steerable vehicle wheel via a steering angle actuating motor,
- having a steering moment simulation device (2), via which a torque (M_{D}) can be defined which acts on the steering wheel (1), the steering moment simulation device comprising an electrically actuable actuating unit (3),
- in which the steering moment simulation device comprises a passive force element (4) which generates a torque (M_{D}) which counteracts the steering movement if the electrically actuable actuating unit (3) fails,
**characterized in that**
the defined torque (M_{D}) can be set by correspondingly actuating the actuating unit (3) via a torsion spring (5).

2. Steering system according to Claim 1, **characterized in that** the passive force element (4) is a friction element for generating a constant frictional moment.

3. Steering system according to Claim 1, **characterized in that** the passive force element (4) is a damping element for generating a speed-dependent damping moment.

4. Steering system according to Claim 3, **characterized in that** the damping moment is compensated for via the actuating unit (3).

5. Steering system according to one of Claims 1 to 4, **characterized in that** the force element (4) is configured such that it can be switched on and off, the force element (4) being switched off if the electrically actuable actuating unit (3) is functional and being switched on if the actuating unit (3) fails.

6. Steering system according to Claim 1, **characterized in that**, in addition to a passive force element (4) which is configured as a friction element for generating a constant frictional moment, a damping element is used, via which a speed-dependent damping moment which counteracts the steering-wheel movement can be generated.

## Revendications

1. Système de direction
- pour un véhicule, dans lequel un mouvement de changement de direction prédéfini par un volant (1) peut être transmis à une roue de véhicule dirigeable par le biais d'un moteur de positionnement de l'angle de direction,
- comprenant un dispositif de simulation du couple de direction (2) par le biais duquel peut être prédéfini un couple (M_{D}) agissant sur le volant (1), le dispositif de simulation du couple de direction comprenant-une unité de positionnement (3) à commande électrique,
- dans lequel le dispositif de simulation du couple de direction comprend un élément dynamométrique passif (4) qui, en cas de panne de l'unité de positionnement (3) à commande électrique, génère un couple (M_{D}) opposé au mouvement de changement de direction,
**caractérisé en ce que** le couple (M_{D}) prédéfini peut être réglé par une commande correspondante de l'unité de positionnement (3) par le biais d'un ressort de torsion (5).

2. Système de direction selon la revendication 1, **caractérisé en ce que** l'élément dynamométrique passif (4) est un élément de friction destiné à générer un moment de friction constant.

3. Système de direction selon la revendication 1, **caractérisé en ce que** l'élément dynamométrique passif (4) est un élément d'amortissement destiné à générer un moment d'amortissement dépendant de la vitesse.

4. Système de direction selon la revendication 3, **caractérisé en ce que** le moment d'amortissement est compensé par l'unité de positionnement (3).

5. Système de direction selon l'une des revendications 1 à 4, **caractérisé en ce que** l'élément dynamométrique (4) est réalisé de manière à pouvoir être activé et désactivé, l'élément dynamométrique (4) étant désactivé lorsque l'unité de positionnement (3) à commande électrique est apte à fonctionner et l'activation ayant lieu en cas de panne de l'unité de positionnement (3).

6. Système de direction selon la revendication 1, **caractérisé en ce qu'**en plus de l'élément dynamométrique passif (4), lequel est réalisé sous la forme d'un élément de friction destiné à générer un moment de friction constant, on utilise un élément d'amortissement par le biais duquel peut être généré un moment d'amortissement dépendant de la vitesse et opposé au mouvement du volant.
